# EUROPEAN PATENT APPLICATION

(11) **EP 4 380 270 A1**
(43) Date of publication of application: **05.06.2024**
(21) Application number: 21951313.2
(22) Date of filing: 29.07.2021
(51) Int. Cl.: H04W 72/04, H04W 72/56

(54) **PDCCH TRANSMISSION METHOD AND APPARATUS, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/109349
(87) International publication number: WO 2023/004706

(57) **Abstract**

The present disclosure belongs to the technical field of communications, and relates to a PDCCH transmission method and apparatus, and a communication device. The method comprises: determining a CORESET priority rule; on the basis of the CORESET priority rule, selecting at least one CORESET from a plurality of CORESETs; and on the basis of the at least one CORESET, transmitting a PDCCH at an overlapping PDCCH monitoring occasion.

## Description

### TECHNICAL FIELD

The disclosure relates to a field of communication technologies, in particular to a physical downlink control channel (PDCCH) transmission method, a PDCCH transmission apparatus and a communication device.

### BACKGROUND

In a 5G New Radio (NR) system, especially when a communication frequency band is in the frequency range 2, due to rapid attenuation of high frequency channels, beam-based transmission and reception is required to ensure signal coverage.

A terminal generally receives PDCCHs sent by a base station through a beam. When monitor occasions corresponding to multiple PDCCH candidates are overlapped, and the Quasi Co Location (QCL) Types D of Control Resource Sets (CORESETs) corresponding to the multiple PDCCH candidates are different, the terminal determines a specified CORESET and uses the QCL Type D corresponding to this CORESET for monitoring PDCCHs at the overlapped monitor occasion.

If the QCL Type D corresponding to the CORESET determined by the terminal does not match with the PDCCH sent by a network device, the terminal will not be able to receive the PDCCH, which may lead to a lower success rate of the PDCCH transmission.

### SUMMARY

Embodiments of the disclosure provide a physical downlink control channel (PDCCH) transmission method, a PDCCH transmission apparatus, and a communication device, to improve a success rate of PDCCH transmission. The described technical solution is provided as follows.

According to a first aspect of embodiments of the disclosure, a PDCCH transmission method is provided. The method includes:
determining a control resource set (CORESET) priority rule;
selecting at least one CORESET from a plurality of CORESETs based on the CORESET priority rule; and
performing PDCCH transmission at an overlapped PDCCH monitor occasion based on the at least one CORESET.

According to a second aspect of embodiments of the disclosure, a PDCCH transmission apparatus is provided. The apparatus includes:
a processing module, configured to determine a CORESET priority rule, and select at least one CORESET from a plurality of CORESETs based on the CORESET priority rule; and
a transceiver module, configured to perform PDCCH transmission at an overlapped PDCCH monitor occasion based on the at least one CORESET.

According to a third aspect of embodiments of the disclosure, a communication device is provided. The communication device includes: a processor and a memory for storing instructions executable by the processor. The processor is configured to load and execute the executable instructions to implement the above PDCCH transmission method.

According to a fourth aspect of embodiments of the disclosure, a computer-readable storage medium for storing instructions is provided. When the instructions are executed by a processor, the above PDCCH transmission method is implemented.

In the embodiments of the disclosure, the at least one CORESET is selected from the plurality of CORESETs according to the CORESET priority rule, and PDCCH transmission is performed at the overlapped PDCCH monitor occasion based on the at least one selected CORESET. Since the priority rule can be adopted by both the terminal and the network side, the network side can use the same resources as the CORESET selected by the terminal to transmit the PDCCH, thereby improving a success rate of the PDCCH monitoring of the terminal.

It is understandable that the above general description and the following detailed descriptions are illustrative and explanatory only and are not used to limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a block diagram of a communication system provided by an embodiment of the disclosure.
FIG. 2 is a flowchart of a PDCCH transmission method according to an embodiment.
FIG. 3 is a flowchart of a PDCCH transmission method according to an embodiment.
FIG. 4 is a block diagram of a PDCCH transmission apparatus according to an embodiment.
FIG. 5 is a block diagram of a communication device according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all possible implementations consistent with the embodiments of the disclosure. Instead, they are merely examples of apparatuses and methods consistent with aspects related to the embodiments of the disclosure as recited in the appended claims.

The terms used in the embodiments of the disclosure are only for the purpose of describing specific embodiments, and are not intended to limit the embodiments of the disclosure. The singular forms of "a" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

It should be understood that although the steps are numbered in the embodiments of the disclosure for ease of understanding, these numbers do not represent the order in which the steps are to be performed, nor do they mean that the sequentially numbered steps must be performed together. It should be understood that one or several steps of the plurality of steps employing sequential numbering may be executed separately to solve the corresponding technical problem and achieve the intended technical solution. Even though the steps are exemplarily listed together in the accompanying drawings, it does not mean that the steps must be performed together. The drawings merely list these steps together as examples for ease of understanding.

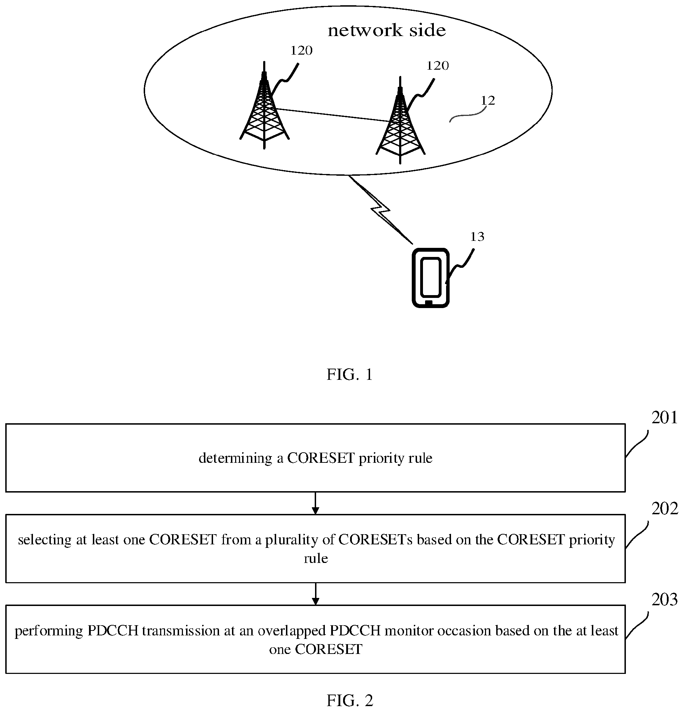

FIG. 1 is a block diagram of a communication system provided by an embodiment of the disclosure. As illustrated in FIG. 1, the communication system includes: a network side 12 and a terminal 13.

The network side 12 includes several network devices 120. The network device 120 may be a base station, which is a device deployed in an access network to provide a wireless communication function for the terminal. The base station may be either a base station of a serving cell of the terminal 13 or a base station of a neighbor cell of the serving cell of the terminal 13. The base station may include various forms of macro base stations, micro base stations, relay stations, access points, transmission reception points (TRPs), and the like. The name of the device having the function of the base station may be different in systems adopting different radio access technologies, which is called gNodeB or gNB in the 5G NR system. As the communication technology evolves, the description of the name "base station" may be changed. The network device 120 may also be a Location Management Function (LMF) entity. The network device 120 may also be an in-vehicle terminal device during vehicle to everything communication.

The terminal 13 may include a variety of handheld devices, in-vehicle devices, wearable devices, computing devices having the wireless communication function, or other processing devices connected to a wireless modem, as well as various forms of user equipment, such as mobile stations (MSs), terminals, Internet of Things (IoT) devices, Industrial Internet of Things (IIoT) devices, and so on. For ease of description, the devices mentioned above are collectively referred to as terminal. The network device 120 and the terminal 13 communicate with each other via some sort of radio interface technologies, for example, by using a Uu interface.

In the R15/R16 standard, the terminal usually receives the PDCCH sent by the base station using one beam. In the R17 standard, the terminal may adopt multiple (e.g., 2) beams to receive the PDCCH sent by the base station. However, in either way, the related art cannot guarantee that the QCL Type D corresponding to the CORESET determined by the terminal can complete reception of PDCCH and ensure a normal PDCCH transmission, which may lead to a lower success rate of the PDCCH transmission in the relevant art.

The communication system and business scenarios described in the embodiments of the disclosure are intended to more clearly illustrate the technical solutions of the embodiments of the disclosure and do not constitute a limitation of the technical solutions provided by the embodiments of the disclosure. It is understandable by those skilled in the art that as system systems evolve and new business scenarios emerge, the technical solutions provided by the embodiments of the disclosure are also applicable to similar technical problems.

FIG. 2 is a flowchart of a PDCCH transmission method according to an embodiment. As illustrated in FIG. 2, the method is executed by the above terminal or network device. The method includes the following steps.

At step 201, a CORESET priority rule is determined.

When the method is executed by the terminal, the CORESET priority rule used by the terminal may be received from the network side or pre-configured in the terminal.

Alternatively, the CORESET priority rule used by the terminal is identical to the CORESET priority rule used by the network side.

At step 202, at least one CORESET is selected from a plurality of CORESETs based on the CORESET priority rule.

In embodiments of the disclosure, each CORESET in the plurality of CORESETs corresponds to at least one QCL Type D, and the QCL Types D corresponding to any two CORESETs are the same or different.

At step 203, PDCCH transmission is performed at an overlapped PDCCH monitor occasion based on the at least one CORESET.

In the embodiments of the disclosure, the at least one CORESET is selected from the plurality of CORESETs based on the CORESET priority rule, and PDCCH transmission is performed at the overlapped PDCCH monitor occasion based on the at least one selected CORESET. Since the priority rule can be adopted by both the terminal and the network side, the network side can use the same resources as the CORESET selected by the terminal to transmit the PDCCH, thereby improving a success rate of the PDCCH monitoring of the terminal.

In a possible implementation of the disclosure, determining the CORESET priority rule of a CORESET, includes at least one of:
determining the CORESET priority rule based on a serving cell index corresponding to the CORESET;
determining the CORESET priority rule based on a Common Search Space (CSS) set index or CSS set pair index corresponding to the CORESET;
determining the CORESET priority rule based on a UE-specific Search Space (USS) set index or USS set pair index corresponding to the CORESET; or
determining the CORESET priority rule based on a number of Transmission Configuration Indication (TCI) states corresponding to the CORESET.

That is, when selecting the CORESET based on the CORESET priority rule, one of the above rules can be used, or two of the above rules can be used, or several of the above rules can be used.

For example, the methods of "determining the CORESET priority rule based on the CSS set index or CSS set pair index corresponding to the CORESET" and "determining the CORESET priority rule based on the USS set index or USS set pair index corresponding to the CORESET" may be used together to select at least one CORESET from the plurality of CORESETs.

For example, the CORESET priority rule determined based on the serving cell index corresponding to the CORESET is described as follow.

The smaller the serving cell index corresponding to the CORESET, the higher the corresponding CORESET priority.

For example, the CORESET priority rule determined based on the number of TCI states corresponding to the CORESET is described as follow.

The larger the number of TCI states corresponding to the CORESET, the higher the corresponding CORESET priority.

Generally, one CORESET can be configured with one or more (e.g., 2) TCI states, and a CORESET configured with multiple TCI states has a higher priority than a CORESET configured with only one TCI state.

In a possible implementation of the disclosure, one CSS set pair consists of two linked CSS sets. The CSS set pair index of the CSS set pair is a smaller index of CSS set indexes of the two CSS sets. Or the CSS set pair index is an index value for the CSS set pair configured by a network device (e.g., base station), which has nothing to do with the CSS set indexes of the two CSS sets in the CSS set pair. Moreover, one USS set pair consists of two linked USS sets. The USS set pair index of the USS set pair is a smaller index of USS set indexes of the two USS sets. Or the USS set pair index is an index value for the USS set pair configured by the network device, which has nothing to do with the USS set indexes of the two USS sets in the USS set pair.

It should be noted that the CSS set pair including two CSS sets may be discussed in two cases. In the first case, the two CSS sets are two CSS sets have different time-domain or frequency-domain resources, and different CSS set indexes. In this case, each CSS set in the CSS set pair corresponds to one QCL Type D. In the second case, the two CSS sets has the same CSS set index, and correspond to the same time-domain and frequency-domain resource. In this case, the two CSS sets are equivalent to one CSS set, but the CSS set corresponds to several QCL Types D, e.g., two QCL Types D. Similarly, the USS set pair including two USS sets may be discussed in two cases. In the first case, the two USS sets have different time-domain or frequency-domain resources, and different USS set indexes. In this case, each USS set in the USS set pair corresponds to one QCL Type D. In the second case, the two USS sets have the same USS set index, and correspond to the same time-domain and frequency-domain resource. The two USS sets are equivalent to one USS set under this case, but the USS set corresponds to several QCL Types D, e.g., two.

For example, determining the CORESET priority rule based on the CSS set index or CSS set pair index corresponding to the CORESET can be realized by the following two implementations.

In the first implementation, the priority is determined based only on a size of the CSS set index or CSS set pair index.

For example, in all CSS sets that do not constitute any CSS set pair (i.e., individual CSS sets having no linked relation) and all CSS set pairs, the smaller the CSS set index or CSS set pair index, the higher the corresponding CORESET priority.

In the second implementation, the priority of a CSS set pair is higher than the priority of a CSS set, the priorities of different CSS set pairs are determined based on a size of each of the indexes of the different CSS set pairs, and the priorities of different CSS sets are determined based on a size of each of the indexes of the different CSS sets.

For example, the CORESET priority corresponding to the CSS set pair is higher than the CORESET priority corresponding to the CSS set that does not constitute any CSS set pair; in all CSS set pairs, the smaller the CSS set pair index, the higher the corresponding CORESET priority; and in all CSS sets that do not constitute any CSS set pair, the smaller the CSS set index, the higher the corresponding CORESET priority.

The difference between the first implementation and the second implementation is that the priority of the CSS set pair is higher than the priority of the individual CSS set even if the CSS set pair index is greater than the individual CSS set index.

For example, determining the CORESET priority rule based on the USS set index or USS set pair index corresponding to the CORESET can be realized by the following two implementations.

In the first implementation, the priority is determined based only on a size of the USS set index or USS set pair index.

For example, in all USS sets that do not constitute any USS set pair and all USS set pairs, the smaller the USS set index or USS set pair index, the higher the corresponding CORESET priority.

In the second implementation, the priority of a USS set pair is higher than the priority of a USS set, the priorities of different USS set pairs are determined based on a size of each of the indexes of the different USS set pairs, and the priorities of different USS sets are determined based on a size of each of the indexes of the different USS sets.

For example, the CORESET priority corresponding to the USS set pair is higher than the CORESET priority corresponding to the USS set that does not constitute any USS set pair; in all USS set pairs, the smaller the USS set pair index, the higher the corresponding CORESET priority; and in all USS sets that do not constitute any USS set pair, the smaller the USS set index, the higher the corresponding CORESET priority.

In a possible implementation of the disclosure, when two priority rules or several priority rules are used to select the CORESET, there is also a priority between the two priority rules or several priority rules.

When "determining the CORESET priority rule based on the CSS set index or CSS set pair index corresponding to the CORESET" and "determining the CORESET priority rule based on the USS set index or USS set pair index corresponding to the CORESET" are used together to select at least one CORESET from the plurality of CORESETs, "determining the CORESET priority rule based on the CSS set index or CSS set pair index corresponding to the CORESET" is prioritized for use, and when no CORESET cannot be selected based on the rule, "determining the CORESET priority rule based on the USS set index or USS set pair index corresponding to the CORESET" is further used.

For example, determining the CORESET priority rule, and selecting at least one CORESET from the plurality of CORESETs based on the CORESET priority rule, includes:
determining whether one or more CORESETs each containing a CSS set exist in the plurality of CORESETs; and
determining the CORESET priority rule based on a CSS set index or CSS set pair index corresponding to each CORESET, and selecting the at least one CORESET from the one or more CORESETs each containing the CSS set, in which the one or more CORESETs each containing the CSS set exist in the plurality of CORESETs.

Alternatively, determining the CORESET priority rule, and selecting at least one CORESET from the plurality of CORESETs based on the CORESET priority rule, includes:
determining whether one or more CORESETs each containing a USS set exist in the plurality of CORESETs; and
determining the CORESET priority rule based on a USS set index or USS set pair index corresponding to each CORESET, and selecting the at least one CORESET from the one or more CORESETs each containing the USS set, in which no CORESET containing the CSS set exists in the plurality of CORESETs, and the one or more CORESETs each containing the USS set exist in the plurality of CORESETs.

In the embodiments of the disclosure, the terminal participating in the PDCCH transmission may be configured with one or more serving cells. In the case where the terminal is configured with only one serving cell, the CORESET is directly selected in accordance with the preceding rules.

However, when the terminal is configured with several serving cells, the terminal also needs to consider a priority of each serving cell when selecting the CORESET. That is, in addition to "determining the CORESET priority rule based on the CSS set index or CSS set pair index corresponding to the CORESET", it also needs to perform the process of "determining the CORESET priority rule based on the serving cell index corresponding to the CORESET".

By taking the process of "determining the CORESET priority rule based on the CSS set index or CSS set pair index corresponding to each CORESET, and selecting the at least one CORESET from the one or more CORESETs each containing the CSS set, in which the one or more CORESETs each containing the CSS set exist in the plurality of CORESETs" as an example, when the terminal selects the CORESET, it can consider the CSS set pair index and then consider the serving cell index, i.e., the CSS set pair is prioritized over the serving cell, or it may also consider the serving cell index and then consider the CSS set pair index, i.e., the serving cell is prioritized over the CSS set pair.

The process of selecting at least one CORESET when the CSS set pair is prioritized over the serving cell includes:
determining one or more CORESETs corresponding to all CSS set pairs from the one or more CORESETs each containing the CSS set;
selecting a serving cell with a smallest serving cell index from serving cells each having a CSS set pair; and
determining the CORESET priority rule based on a CSS set index or CSS set pair index corresponding to each CORESET, and selecting the at least one CORESET from CORESETs corresponding to the CSS set pair corresponding to the serving cell with the smallest serving cell index.

The process of selecting at least one CORESET when the serving cell is prioritized over the CSS set pair includes:
selecting a serving cell with a smallest serving cell index from serving cells each having a CSS set; and
determining the CORESET priority rule based on a CSS set index or CSS set pair index corresponding to each CORESET, and selecting the at least one CORESET from CORESETs corresponding to the CSS set or CSS set pair corresponding to the serving cell with the smallest serving cell index.

The CSS set pair is defined in "determining the CORESET priority rule based on the CSS set index or CSS set pair index corresponding to the CORESET", and will not be described again.

By taking the process of "determining the CORESET priority rule based on the USS set index or USS set pair index corresponding to each CORESET, and selecting the at least one CORESET from the one or more CORESETs each containing the USS set, in which no CORESET containing the CSS set exists in the plurality of CORESETs and the one or more CORESETs each containing the USS set exist in the plurality of CORESETs " as an example, when the terminal selects the CORESET, it can consider the USS set pair index and then consider the serving cell index, i.e., the USS set pair is prioritized over the serving cell, or it may also consider the serving cell index and then consider the USS set pair index, i.e., the serving cell is prioritized over the USS set pair.

The process of selecting at least one CORESET when the USS set pair is prioritized over the serving cell includes:
determining one or more CORESETs corresponding to all USS set pairs from the one or more CORESETs each containing the USS set;
selecting a serving cell with a smallest serving cell index from serving cell s each having a USS set pair; and
determining the CORESET priority rule based on a USS set index or USS set pair index corresponding to each CORESET, and selecting the at least one CORESET from CORESETs corresponding to the USS set pair corresponding to the serving cell with the smallest serving cell index.

The process of selecting at least one CORESET when the serving cell is prioritized over the USS set pair includes:
selecting a serving cell with a smallest serving cell index from serving cells each having a USS set; and
determining the CORESET priority rule based on a USS set index or USS set pair index corresponding to each CORESET, and selecting the at least one CORESET from CORESETs corresponding to the USS set or USS set pair corresponding to the serving cell with the smallest serving cell index.

In a possible implementation of the disclosure, when the method is executed by the terminal, performing the PDCCH transmission at the overlapped PDCCH monitor occasion based on the at least one CORESET, includes:
monitoring, at the overlapped PDCCH monitor occasion, the PDCCH in the selected at least one CORESET, and the PDCCH in another CORESET having at least one same QCL Type D with any CORESET in the selected at least one CORESET; or
determining at least one QCL Type D of the selected at least one CORESET, and monitoring, at the overlapped PDCCH monitor occasion, the PDCCH in a CORESET having a same QCL Type D as any one of the at least one QCL Type D.

For example, while determining the CORESET priority rule based on the CSS set index or CSS set pair index corresponding to the CORESET, a CSS set pair with a smallest CSS set pair index is determined, the CSS set pair contains two CSS sets that are corresponding to the same CORESET# 1, and the QCL Types D corresponding to CORESET#1 are QCL Type D#0 and QCL Type D#1, respectively. In this case, the terminal needs to monitor the PDCCH within CORESET#1 at the overlapped PDCCH monitor occasion, and monitor the PDCCH within other specified CORESETs each having at least one QCL Type D identical to QCL Type D#0 or QCL Type D#1.

For example, while determining the CORESET priority rule based on the CSS set index or CSS set pair index corresponding to the CORESET, a CSS set pair with a smallest CSS set pair index is determined, the CSS set pair contains two CSS sets that are corresponding to the same CORESET#1, and the QCL Types D corresponding to CORESET#1 are QCL Type D#0 and QCL Type D#1, respectively. In this case, the terminal determines QCL Type D#0 and QCL Type D#1 of the selected CORESET#1 and monitors, at the overlapped PDCCH monitor occasion, the PDCCH within the specified CORESETs each having at least one QCL Type D identical to QCL Type D#0 or QCL Type D#1. Obviously, CORESET#1 is included in the specified CORESETs.

For example, while determining the CORESET priority rule based on the CSS set index or CSS set pair index corresponding to the CORESET, a CSS set pair with a smallest CSS set pair index is determined, the CSS set pair contains two CSS sets corresponding to CORESET#1 and CORESET#2, respectively, CORESET#1 corresponds to QCL Type D#0, and CORESET#2 corresponds to QCL Type D#1. In this case, the terminal needs to monitor the PDCCH within CORESET#1 and CORESET#2 at the overlapped PDCCH monitor occasion, and monitor the PDCCH within other specified CORESETs each having at least one QCL Type D identical to QCL Type D#0 or QCL Type D#1.

For example, while determining the CORESET priority rule based on the CSS set index or CSS set pair index corresponding to the CORESET, a CSS set pair with a smallest CSS set pair index is determined, the CSS set pair contains two CSS sets corresponding to CORESET#1 and CORESET#2, respectively, CORESET#1 corresponds to QCL Type D#0, and CORESET#2 corresponds to QCL Type D#1. In this case, the terminal determines QCL Type D#0 of the selected CORESET#1 and QCL Type D#1 of CORESET#2, and monitors, at the overlapped PDCCH monitor occasion, the PDCCH within the specified CORESETs each having at least one QCL Type D that is identical to QCL Type D#0 or QCL Type D#1. Obviously, CORESET#1 and CORESET#2 are included in the specified CORESETs.

When the terminal monitors the PDCCH, different QCL Types D correspond to different beam directions. If the rules for the network device and the terminal to determine the beam direction (QCL Type D of CORESET) are different, for example, the network device sends the PDCCH in a beam direction A and the terminal receives the PDCCH in a beam direction B, the PDCCH transmission is failed. In the disclosure, the network device and the terminal use the same rule to determine the beam direction, thereby ensuring that a successful PDCCH transmission.

For example, the at least one CORESET includes one CORESET, and the CORESET is configured with a plurality of TCI states; or
the at least one CORESET includes a plurality of CORESETs, and each CORESET in the plurality of CORESETs is configured with one TCI state; or
the at least one CORESET includes a plurality of CORESETs, and each CORESET in a portion of the plurality of CORESETs is configured with one TCI state, and each CORESET in another portion of the plurality of CORESETs is configured with a plurality of TCI states.

It is noted that each TCI state includes one QCL Type D.

In the embodiments of the disclosure, the number of CORESETs selected by the terminal from the plurality of CORESETs may be determined based on a capability of the terminal. For example, if the terminal is capable of supporting two beams simultaneously, one or two CORESETs with the highest priority are determined, and two beams corresponding to the one or two CORESETs are used to monitor the PDCCH. For another example, if the terminal can support only one beam, the CORESET with the highest priority is determined, and the beam corresponding to the CORESET is used to monitor the PDCCH.

Alternatively, the method is executed by the terminal. The method further includes:
receiving a radio resource control (RRC) signaling sent by the network device, the RRC signaling including the plurality of CORESETs and configuration information of search space sets; and
determining the overlapped PDCCH monitor occasion based on the configuration information.

Correspondingly, when the method is executed by the network device, the method further includes: sending a RRC signaling to the terminal, the RRC signaling including the plurality of CORESETs and configuration information of search space sets. The terminal receives the RRC signaling sent by the network device.

The configuration information may determine, in addition to the overlapped PDCCH monitor occasion, the plurality of CORESETs, including at least one of the service cell indexes, the CSS set indexes, the CSS set pair indexes, the USS set indexes, the USS set pair indexes, and the numbers of TCI states corresponding respectively to the plurality of CORESETs. Therefore, the terminal may compare the CORESET priorities based on the contents determined from the configuration information, and select the at least one CORESET.

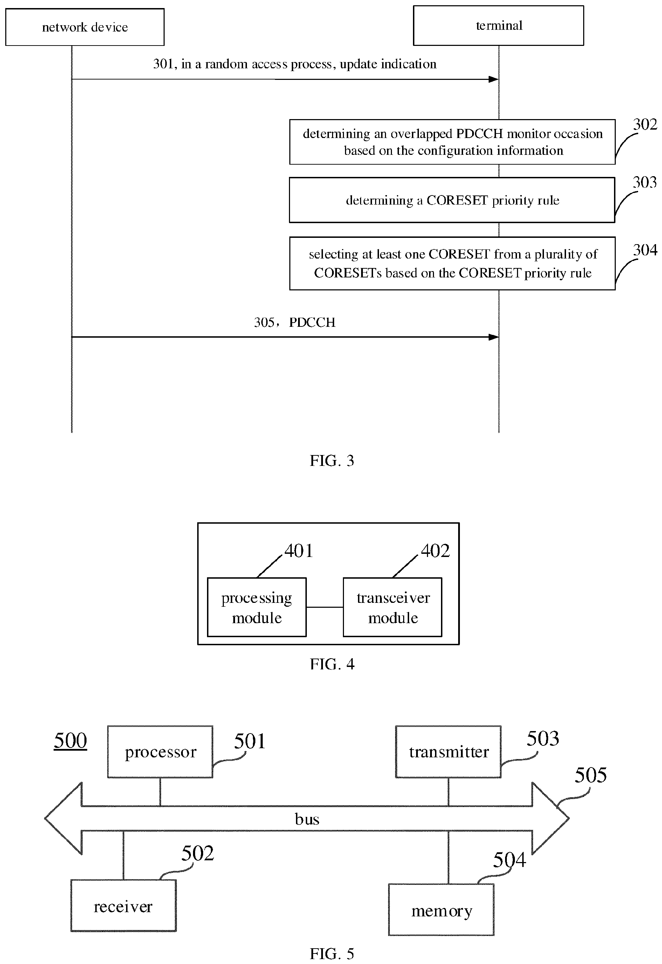

FIG. 3 is a flowchart of a PDCCH transmission method according to an embodiment. As illustrated in FIG. 3, the method is performed jointly by a terminal and a network device. The method includes the following steps.

At step 301, the network device sends a RRC signaling to the terminal, the RRC signaling including a plurality of CORESETs and configuration information of search space sets; the terminal receives the RRC signaling sent by the network device.

At step 302, the terminal determines an overlapped PDCCH monitor occasion based on the configuration information.

The terminal determines the overlapped PDCCH monitor occasion based on the search space sets configured by the network device in the aforementioned RRC signaling.

At step 303, the terminal determines a CORESET priority rule.

The CORESET priority rule used by the terminal can be received from the network side or pre-configured in the terminal.

Alternatively, the CORESET priority rule used by the terminal is identical to the CORESET priority rule used on the network side.

In a possible implementation of the disclosure, determining the CORESET priority rule, includes at least one of:
determining the CORESET priority rule based on a serving cell index corresponding to each CORESET;
determining the CORESET priority rule based on a CSS set index or CSS set pair index corresponding to each CORESET;
determining the CORESET priority rule based on a USS set index or USS set pair index corresponding to each CORESET; or
determining the CORESET priority rule based on a number of TCI states corresponding to each CORESET.

That is, when selecting the CORESET based on the CORESET priority rule, one of the above rules can be used, or two of the above rules can be used, or several of the above rules can be used.

For example, the steps of "determining the CORESET priority rule based on the CSS set index or CSS set pair index corresponding to each CORESET" and "determining the CORESET priority rule based on the USS set index or USS set pair index corresponding to each CORESET" may be used together to select at least one CORESET from the plurality of CORESETs.

For example, the CORESET priority rule determined based on the serving cell index corresponding to each CORESET is described as follow.

The smaller the serving cell index corresponding to the CORESET, the higher the corresponding CORESET priority.

For example, the CORESET priority rule determined based on the number of TCI states corresponding to each CORESET is described as follow.

The larger the number of TCI states corresponding to the CORESET, the higher the corresponding CORESET priority.

Generally, one CORESET can be configured with one or more (e.g., 2) TCI states, and a CORESET configured with multiple TCI states has a higher priority than a CORESET configured with only one TCI state.

In a possible implementation of the disclosure, a CSS set pair consists of two linked CSS sets. The CSS set pair index of the CSS set pair is a smaller index of CSS set indexes of the two CSS sets. Or the CSS set pair index is an index value for the CSS set pair configured by a network device (e.g., base station), which has nothing to do with the CSS set indexes of the two CSS sets in the CSS set pair. Moreover, a USS set pair consists of two linked USS sets. The USS set pair index of the USS set pair is a smaller index of USS set indexes of the two USS sets. Or the USS set pair index is an index value for the USS set pair configured by the network device, which has nothing to do with the USS set indexes of the two USS sets in the USS set pair.

It should be noted that the CSS set pair including two CSS sets may be discussed in two cases. In the first case, the two CSS sets are two CSS sets have different time-domain or frequency-domain resources, and different CSS set indexes. In this case, each CSS set in the CSS set pair corresponds to one QCL Type D. In the second case, the two CSS sets has the same CSS set index, and correspond to the same time-domain and frequency-domain resource. In this case, the two CSS sets are equivalent to one CSS set, but the CSS set corresponds to several QCL Types D, e.g., two QCL Types D. Similarly, the USS set pair including two USS sets may be discussed in two cases. In the first case, the two USS sets have different time-domain or frequency-domain resources, and different USS set indexes. In this case, each USS set in the USS set pair corresponds to one QCL Type D. In the second case, the two USS sets have the same USS set index, and correspond to the same time-domain and frequency-domain resource. The two USS sets are equivalent to one USS set under this case, but the USS set corresponds to several QCL Types D, e.g., two.

For example, determining the CORESET priority rule based on the CSS set index or CSS set pair index corresponding to each CORESET can be realized by the following two implementations.

In the first implementation, the priority is determined based only on a size of the CSS set index or CSS set pair index.

For example, in all CSS sets that do not constitute any CSS set pair and all CSS set pairs, the smaller the CSS set index or CSS set pair index, the higher the corresponding CORESET priority.

In the second implementation, the priority corresponding to the CSS set pair is higher than the priority corresponding to the CSS set, the priorities corresponding to different CSS set pairs are determined based on a size of each CSS set pair index, and the priorities corresponding to different CSS sets are determined based on a size of each CSS set index.

For example, the CORESET priority corresponding to the CSS set pair is higher than the CORESET priority corresponding to the CSS set that does not constitute any CSS set pair; in all CSS set pairs, the smaller the CSS set pair index, the higher the corresponding CORESET priority; and in all CSS sets that do not constitute any CSS set pair, the smaller the CSS set index, the higher the corresponding CORESET priority.

For example, determining the CORESET priority rule based on the USS set index or USS set pair index corresponding to each CORESET can be realized by the following two implementations.

In the first implementation, the priority is determined based only on a size of the USS set index or USS set pair index.

For example, in all USS sets that do not constitute any USS set pair and all USS set pairs, the smaller the USS set index or USS set pair index, the higher the corresponding CORESET priority.

In the second implementation, the priority corresponding to the USS set pair is higher than the priority corresponding to the USS set, the priorities corresponding to different USS set pairs are determined based on a size of each USS set pair index, and the priorities corresponding to different USS sets are determined based on a size of each USS set index.

For example, the CORESET priority corresponding to the USS set pair is higher than the CORESET priority corresponding to the USS set that does not constitute any USS set pair; in all USS set pairs, the smaller the USS set pair index, the higher the corresponding CORESET priority; and in all USS sets that do not constitute any USS set pair, the smaller the USS set index, the higher the corresponding CORESET priority.

In a possible implementation of the disclosure, when two priority rules or several priority rules are used to select the CORESET, there is also a priority between the two priority rules or several priority rules.

When "determining the CORESET priority rule based on the CSS set index or CSS set pair index corresponding to each CORESET" and "determining the CORESET priority rule based on the USS set index or USS set pair index corresponding to each CORESET" are used together to select at least one CORESET from the plurality of CORESETs, "determining the CORESET priority rule based on the CSS set index or CSS set pair index corresponding to each CORESET" is prioritized for use, and when no CORESET cannot be selected based on the rule, "determining the CORESET priority rule based on the USS set index or USS set pair index corresponding to each CORESET" is further used.

At step 304, the terminal determines the CORESET priority rule, and selects at least one CORESET from the plurality of CORESETs based on the CORESET priority rule.

For example, determining the CORESET priority rule, and selecting at least one CORESET from the plurality of CORESETs based on the CORESET priority rule, includes:
determining whether one or more CORESETs each containing a CSS set exist in the plurality of CORESETs; and
determining the CORESET priority rule based on a CSS set index or CSS set pair index corresponding to each CORESET, and selecting the at least one CORESET from the one or more CORESETs each containing the CSS set, in which the one or more CORESETs each containing the CSS set exist in the plurality of CORESETs.

Alternatively, determining the CORESET priority rule, and selecting at least one CORESET from the plurality of CORESETs based on the CORESET priority rule, includes:
determining whether one or more CORESETs each containing a USS set exist in the plurality of CORESETs; and
determining the CORESET priority rule based on a USS set index or USS set pair index corresponding to each CORESET, and selecting the at least one CORESET from the one or more CORESETs each containing the USS set, in which no CORESET containing the CSS set exists in the plurality of CORESETs, and the one or more CORESETs each containing the USS set exist in the plurality of CORESETs.

In the embodiments of the disclosure, the terminal may be configured with one or more serving cells. In the case where the terminal is configured with only one serving cell, the CORESET is directly selected in accordance with the preceding rules.

However, when the terminal is configured with several serving cells, the terminal also needs to consider a priority of each serving cell when selecting the CORESET.

By taking the process of "determining the CORESET priority rule based on the CSS set index or CSS set pair index corresponding to each CORESET, and selecting the at least one CORESET from the one or more CORESETs each containing the CSS set, in which the one or more CORESETs each containing the CSS set exist in the plurality of CORESETs" as an example, when the terminal selects the CORESET, it can consider the CSS set pair index and then consider the serving cell index, i.e., the CSS set pair is prioritized over the serving cell, or it may also consider the serving cell index and then consider the CSS set pair index, i.e., the serving cell is prioritized over the CSS set pair.

The process of selecting at least one CORESET when the CSS set pair is prioritized over the serving cell includes:
determining one or more CORESETs corresponding to all CSS set pairs from the one or more CORESETs each containing the CSS set;
selecting a serving cell with a smallest serving cell index from serving cells each having a CSS set pair; and
determining the CORESET priority rule based on a CSS set index or CSS set pair index corresponding to each CORESET, and selecting the at least one CORESET from CORESETs corresponding to the CSS set pair corresponding to the serving cell with the smallest serving cell index.

The process of selecting at least one CORESET when the serving cell is prioritized over the CSS set pair includes:
selecting a serving cell with a smallest serving cell index from serving cells each having a CSS set; and
determining the CORESET priority rule based on a CSS set index or CSS set pair index corresponding to each CORESET, and selecting the at least one CORESET from CORESETs corresponding to the CSS set or CSS set pair corresponding to the serving cell with the smallest serving cell index.

The CSS set pair is defined in "determining the CORESET priority rule based on the CSS set index or CSS set pair index corresponding to each CORESET", and will not be described again.

By taking the process of "determining the CORESET priority rule based on the USS set index or USS set pair index corresponding to each CORESET, and selecting the at least one CORESET from the one or more CORESETs each containing the USS set, in which no CORESET containing the CSS set exists in the plurality of CORESETs and the one or more CORESETs each containing the USS set exist in the plurality of CORESETs " as an example, when the terminal selects the CORESET, it can consider the USS set pair index and then consider the serving cell index, i.e., the USS set pair is prioritized over the serving cell, or it may also consider the serving cell index and then consider the USS set pair index, i.e., the serving cell is prioritized over the USS set pair.

The process of selecting at least one CORESET when the USS set pair is prioritized over the serving cell includes:
determining one or more CORESETs corresponding to all USS set pairs from the one or more CORESETs each containing the USS set;
selecting a serving cell with a smallest serving cell index from serving cells each having a USS set pair; and
determining the CORESET priority rule based on a USS set index or USS set pair index corresponding to each CORESET, and selecting the at least one CORESET from CORESETs corresponding to the USS set pair corresponding to the serving cell with the smallest serving cell index.

The process of selecting at least one CORESET when the serving cell is prioritized over the USS set pair includes:
selecting a serving cell with a smallest serving cell index from serving cells each having a USS set; and
determining the CORESET priority rule based on a USS set index or USS set pair index corresponding to each CORESET, and selecting the at least one CORESET from CORESETs corresponding to the USS set or USS set pair corresponding to the serving cell with the smallest serving cell index.

The procedure of step 304 will be described respectively for the case where the terminal is configured with only one serving cell and the case where the terminal is configured with several serving cells.

In the first case, the terminal is configured with only one serving cell.

At step 1, it is determined whether one or more CORESET each containing a CSS set exist in all CORESETs, and if so, the one or more CORESETs are selected.

At step 2, a CSS set pair is selected from CSS sets, and the CORESET is selected according to a CSS set pair index.

At step 3, if not, the CORESET is selected using the USS set in the same way as the previous way using the CSS set.

In the second case, the terminal is configured with several serving cells.

At step 1, it is determined whether one or more CORESETs each containing a CSS set exist in all CORESETs, and if so, the one or more CORESETs are selected.

At step 2, a CSS set pair is selected from CSS sets.

At step 3, a serving cell with a smallest serving cell index is selected from serving cells each having the CSS set pair according to the selected CSS set pair.

At step 4, the CORESET is selected according to the CSS set pair index from the CSS set pair corresponding to the serving cell with the smallest serving cell index.

At step 5, if not, the CORESET is selected using the USS set in the same way as the previous way using the CSS set.

The step 2 and step 3 can be replaced as follows.

At step 2, a serving cell with a smallest serving cell index is selected from serving cells each having a CSS set according to the selected CSS set.

At step 3, a CSS set pair corresponding to the serving cell with the smallest serving cell index is determined.

At step 305, the terminal monitors the PDCCH at an overlapped PDCCH monitor occasion based on the selected at least one CORESET.

The PDCCH monitored by the terminal is sent by the network device, and the network device determines at least one CORESET to transmit the PDCCH at the overlapped PDCCH monitor occasion in the same manner as the terminal (i.e., step 304), thereby ensuring that the terminal is able to accurately monitor the PDCCH.

In a possible implementation of the disclosure, monitoring the PDCCH at the overlapped PDCCH monitor occasion based on the at least one CORESET, includes:
monitoring, at the overlapped PDCCH monitor occasion, the PDCCH in the selected at least one CORESET, and the PDCCH in another CORESET having at least one same QCL Type D with any CORESET in the selected at least one CORESET; or
determining at least one QCL Type D of the selected at least one CORESET, and monitoring, at the overlapped PDCCH monitor occasion, the PDCCH in a CORESET having a QCL Type D that is identical to any one of the at least one QCL Type D.

For example, while determining the CORESET priority rule based on the CSS set index or CSS set pair index corresponding to the CORESET, a CSS set pair with a smallest CSS set pair index is determined, the CSS set pair contains two CSS sets that are corresponding to the same CORESET#1, and the QCL Types D corresponding to CORESET#1 are QCL Type D#0 and QCL Type D#1, respectively. In this case, the terminal needs to monitor the PDCCH within CORESET#1 at the overlapped PDCCH monitor occasion, and monitor the PDCCH within other specified CORESETs each having at least one QCL Type D identical to QCL Type D#0 or QCL Type D#1.

For example, while determining the CORESET priority rule based on the CSS set index or CSS set pair index corresponding to the CORESET, a CSS set pair with a smallest CSS set pair index is determined, the CSS set pair contains two CSS sets that are corresponding to the same CORESET#1, and the QCL Types D corresponding to CORESET#1 are QCL Type D#0 and QCL Type D#1, respectively. In this case, the terminal determines QCL Type D#0 and QCL Type D#1 of the selected CORESET#1 and monitors, at the overlapped PDCCH monitor occasion, the PDCCH within the specified CORESETs each having at least one QCL Type D identical to QCL Type D#0 or QCL Type D#1. Obviously, CORESET#1 is included in the specified CORESETs .

For example, while determining the CORESET priority rule based on the CSS set index or CSS set pair index corresponding to the CORESET, a CSS set pair with a smallest CSS set pair index is determined, the CSS set pair contains two CSS sets corresponding to CORESET#1 and CORESET#2, respectively, CORESET#1 corresponds to QCL Type D#0, and CORESET#2 corresponds to QCL Type D#1. In this case, the terminal needs to monitor the PDCCH within CORESET#1 and CORESET#2 at the overlapped PDCCH monitor occasion, and monitor the PDCCH within other specified CORESETs each having at least one QCL Type D identical to QCL Type D#0 or QCL Type D#1.

For example, while determining the CORESET priority rule based on the CSS set index or CSS set pair index corresponding to the CORESET, a CSS set pair with a smallest CSS set pair index is determined, the CSS set pair contains two CSS sets corresponding to CORESET#1 and CORESET#2, respectively, CORESET#L corresponds to QCL Type D#0, and CORESET#2 corresponds to QCL Type D#1. In this case, the terminal determines QCL Type D#0 of the selected CORESET#1 and QCL Type D#1 of CORESET#2, and monitors, at the overlapped PDCCH monitor occasion, the PDCCH within the specified CORESETs each having at least one QCL Type D that is identical to QCL Type D#0 or QCL Type D#1. Obviously, CORESET#1 and CORESET#2 are included in the specified CORESETs.

It should be noted that if two CORESETs corresponding to a CSS set pair or a USS set pair are selected, the QCL Type D corresponding to each of the two CORESETs needs to be determined for monitoring.

For example, the at least one CORESET includes one CORESET, and the CORESET is configured with a plurality of TCI states; or
the at least one CORESET includes a plurality of CORESETs, and each CORESET in the plurality of CORESETs is configured with one TCI state; or
the at least one CORESET includes a plurality of CORESETs, and each CORESET in a portion of the plurality of CORESETs is configured with one TCI state, and each CORESET in another portion of the plurality of CORESETs is configured with a plurality of TCI states.

It is noted that each TCI state includes one QCL Type D.

FIG. 4 is a block diagram of a PDCCH transmission apparatus according to an embodiment. The apparatus has a function of realizing the terminal or network device in the above method embodiments, and the function can be realized by hardware or by executing corresponding software by hardware. As illustrated in FIG. 4, the apparatus includes: a processing module 401 and a transceiver module 402.

The processing module 401 is configured to determine a CORESET priority rule, and select at least one CORESET from a plurality of CORESETs based on the CORESET priority rule.

The transceiver module 402 is configured to perform PDCCH transmission at an overlapped PDCCH monitor occasion based on the at least one CORESET.

Alternatively, the CORESET priority rule includes at least one of:
determining the CORESET priority rule based on a serving cell index corresponding to each CORESET;
determining the CORESET priority rule based on a CSS set index or CSS set pair index corresponding to each CORESET;
determining the CORESET priority rule based on a USS set index or USS set pair index corresponding to each CORESET; or
determining the CORESET priority rule based on a number of TCI states corresponding to each CORESET.

Alternatively, a CSS set pair index of a CSS set pair is a smaller index of CSS set indexes of two CSS sets; or a CSS set pair index of a CSS set pair is an index value for the CSS set pair configured by a network device, which has nothing to do with CSS set indexes of CSS sets in the CSS set pair.

Determining the CORESET priority rule based on the CSS set index or CSS set pair index corresponding to the CORESET, includes:
in all CSS sets that do not constitute any CSS set pair and all CSS set pairs, the smaller a CSS set index or CSS set pair index, the higher a corresponding CORESET priority; or
a CORESET priority corresponding to a CSS set pair is higher than a CORESET priority corresponding to a CSS set that does not constitute any CSS set pair; in all CSS set pairs, the smaller a CSS set pair index, the higher a corresponding CORESET priority; and in all CSS sets that do not constitute any CSS set pair, the smaller a CSS set index, the higher a corresponding CORESET priority;
in which a CSS set pair includes two linked CSS sets.

Alternatively, a USS set pair index of a USS set pair is a smaller index of USS set indexes of two USS sets; or a USS set pair index of a USS set pair is an index value for the USS set pair configured by a network device, which has nothing to do with USS set indexes of USS sets in the USS set pair.

Determining the CORESET priority rule based on the USS set index or USS set pair index corresponding to the CORESET, includes:
in all USS sets that do not constitute any USS set pair and all USS set pairs, the smaller a USS set index or USS set pair index, the higher a corresponding CORESET priority; or
a CORESET priority corresponding to a USS set pair is higher than a CORESET priority corresponding to a USS set that does not constitute any USS set pair; in all USS set pairs, the smaller a USS set pair index, the higher a corresponding CORESET priority; and in all USS sets that do not constitute any USS set pair, the smaller a USS set index, the higher a corresponding CORESET priority;
in which a USS set pair includes two linked USS sets.

Alternatively, the processing module 401 is configured to: determine whether one or more CORESETs each containing a CSS set exist in the plurality of CORESETs; and
determine the CORESET priority rule based on the CSS set index or CSS set pair index corresponding to each CORESET, and select the at least one CORESET from the one or more CORESETs each containing the CSS set, in which the one or more CORESETs each containing the CSS set exist in the plurality of CORESETs.

Alternatively, the processing module 401 is configured to: determine whether one or more CORESETs each containing a USS set exist in the plurality of CORESETs; and
determine the CORESET priority rule based on the USS set index or USS set pair index corresponding to each CORESET, select the at least one CORESET from the one or more CORESETs each containing the USS set, in which no CORESET containing the CSS set exists in the plurality of CORESETs, and the one or more CORESETs each containing the USS set exist in the plurality of CORESETs.

Alternatively, a terminal participating in the PDCCH transmission is configured with a plurality of serving cells.

The processing module 401 is configured to: determine one or more CORESETs corresponding to all CSS set pairs from the one or more CORESETs each containing the CSS set;
select a serving cell with a smallest serving cell index from serving cells each having a CSS set pair; and
determine the CORESET priority rule based on the CSS set index or CSS set pair index corresponding to each CORESET, and select the at least one CORESET from one or more CORESETs corresponding to the CSS set pair corresponding to the serving cell with the smallest serving cell index.

Alternatively, the processing module 401 is configured to: select a serving cell with a smallest serving cell index from serving cells each having a CSS set; and
determine the CORESET priority rule based on the CSS set index or CSS set pair index corresponding to each CORESET, select the at least one CORESET from one or more CORESETs corresponding to the CSS set or a CSS set pair corresponding to the serving cell with the smallest serving cell index.

Alternatively, the processing module 401 is configured to: determine one or more CORESETs corresponding to all USS set pairs from the one or more CORESETs each containing the USS set;
select a serving cell with a smallest serving cell index from serving cells each having a USS set pair; and
determine the CORESET priority rule based on the USS set index or USS set pair index corresponding to each CORESET, select the at least one CORESET from one or more CORESETs corresponding to the USS set pair corresponding to the serving cell with the smallest serving cell index.

Alternatively, the processing module 401 is configured to: select a serving cell with a smallest serving cell index from serving cells each having a USS set; and
determine the CORESET priority rule based on the USS set index or USS set pair index corresponding to each CORESET, select the at least one CORESET from one or more CORESETs corresponding to the USS set or a USS set pair corresponding to the serving cell with the smallest serving cell index.

Alternatively, the transceiver module 402 is configured to: monitor, at the overlapped PDCCH monitor occasion, a PDCCH in the selected at least one CORESET, and the PDCCH in another CORESET having at least one same QCL Type D with any CORESET in the selected at least one CORESET; or
determine at least one QCL Type D of the selected at least one CORESET, and monitor, at the overlapped PDCCH monitor occasion, a PDCCH in a CORESET having a same QCL Type D as any one of the at least one QCL Type D.

Alternatively, the at least one CORESET includes a CORESET, and the CORESET is configured with a plurality of TCI states; or
the at least one CORESET includes a plurality of CORESETs, and each CORESET in the plurality of CORESETs is configured with a TCI state; or
the at least one CORESET includes a plurality of CORESETs, and each CORESET in a portion of the plurality of CORESETs is configured with a TCI state, and each CORESET in the other portion of the plurality of CORESETs is configured with a plurality of TCI states.

Alternatively, the transceiver module 402 is configured to: receive a RRC signaling sent by a network device, the RRC signaling including the plurality of CORESETs and configuration information of search space sets.

The processing module 401 is configured to: determine the overlapped PDCCH monitor occasion based on the configuration information.

FIG. 5 is a block diagram of a communication device 500 according to an exemplary embodiment. The communication device 500 may be a terminal or network device as described above. The communication device may include: a processor 501, a receiver 502, a transmitter 503, a memory 504, and a bus 505.

The processor 501 includes one or more processing cores, and the processor 501 performs various functional applications and information processing by running software programs and modules.

The receiver 502 and the transmitter 503 may be realized as a communication component, which may be a communication chip.

The memory 504 is connected to the processor 501 via a bus 505.

The memory 504 may be used to store at least one instruction, and the processor 501 is used to execute the at least one instruction to realize each step in the above method embodiments.

The memory 504 may be implemented using any type of volatile or non-volatile memory devices, or a combination thereof. The volatile or non-volatile memory devices include, but are not limited to: disks or optical disks, electrically erasable programmable read-only memories (EEPROMs), erasable programmable read-only memories (EPROMs), static random-access memories (SRAMs), read-only memories (ROMs), magnetic memories, flash memories, and programmable read-only memories (PROMs).

In the exemplary embodiment, there is also provided a computer-readable storage medium. The computer-readable storage medium stores at least one instruction, at least one program segment, at least one code set or instruction set. The at least one instruction, at least one program segment, and at least one code set or instruction set are loaded and executed by the processor to implement the PDCCH transmission method provided by each of the above method embodiments.

An exemplary embodiment of the disclosure also provides a PDCCH transmission system. The PDCCH transmission system includes a terminal and a network device. Either the terminal or the network device can be a communication device provided by the embodiment shown in FIG. 5.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A physical downlink control channel (PDCCH) transmission method comprising:
determining a control resource set (CORESET) priority rule;
selecting at least one CORESET from a plurality of CORESETs based on the CORESET priority rule; and
performing PDCCH transmission at an overlapped PDCCH monitor occasion based on the at least one CORESET.

2. The method of claim 1, wherein determining the CORESET priority rule comprises at least one of:
determining the CORESET priority rule based on a serving cell index corresponding to each CORESET;
determining the CORESET priority rule based on a Common Search Space (CSS) set index or a CSS set pair index corresponding to each CORESET;
determining the CORESET priority rule based on a UE-specific Search Space (USS) set index or a USS set pair index corresponding to each CORESET; or
determining the CORESET priority rule based on a number of Transmission Configuration Indication (TCI) states corresponding to each CORESET.

3. The method of claim 2, wherein determining the CORESET priority rule based on the CSS set index or the CSS set pair index corresponding to each CORESET comprises:
in all CSS sets not constituting any CSS set pair and all CSS set pairs, the smaller a CSS set index or a CSS set pair index, the higher a corresponding CORESET priority; or
a CORESET priority corresponding to a CSS set pair is higher than a CORESET priority corresponding to a CSS set that does not constitute any CSS set pair; in all CSS set pairs, the smaller a CSS set pair index, the higher a corresponding CORESET priority; and in all CSS sets that do not constitute any CSS set pair, the smaller a CSS set index, the higher a corresponding CORESET priority;
wherein a CSS set pair comprises two linked CSS sets.

4. The method of claim 3, wherein a CSS set pair index of the CSS set pair is a smaller index of CSS set indexes of the two linked CSS sets, or a CSS set pair index of the CSS set pair is an index value for the CSS set pair configured by a network device.

5. The method of claim 2, wherein determining the CORESET priority rule based on the USS set index or USS set pair index corresponding to each CORESET comprises:
in all USS sets not constituting any USS set pair and all USS set pairs, the smaller a USS set index or a USS set pair index, the higher a corresponding CORESET priority; or
a CORESET priority corresponding to a USS set pair is higher than a CORESET priority corresponding to a USS set that does not constitute any USS set pair; in all USS set pairs, the smaller a USS set pair index, the higher a corresponding CORESET priority; and in all USS sets that do not constitute any USS set pair, the smaller a USS set index, the higher a corresponding CORESET priority;
wherein a USS set pair comprises two linked USS sets.

6. The method of claim 5, wherein a USS set pair index of the USS set pair is a smaller index of USS set indexes of the two linked USS sets, or a USS set pair index of the USS set pair is an index value for the USS set pair configured by a network device.

7. The method of any one of claims 2-6, wherein selecting the at least one CORESET from the plurality of CORESETs based on the CORESET priority rule comprises:
determining whether one or more CORESETs each containing a CSS set exist in the plurality of CORESETs; and
determining the CORESET priority rule based on the CSS set index or the CSS set pair index corresponding to each CORESET, and selecting the at least one CORESET from the one or more CORESETs each containing the CSS set, wherein the one or more CORESETs each containing the CSS set exist in the plurality of CORESETs.

8. The method of claim 7, wherein selecting the at least one CORESET from the plurality of CORESETs based on the CORESET priority rule further comprises:
determining whether one or more CORESETs each containing a USS set exist in the plurality of CORESETs; and
determining the CORESET priority rule based on the USS set index or the USS set pair index corresponding to each CORESET, and selecting the at least one CORESET from the one or more CORESETs each containing the USS set, wherein no CORESET containing the CSS set exists in the plurality of CORESETs, and the one or more CORESETs each containing the USS set exist in the plurality of CORESETs.

9. The method of claim 7, wherein a terminal participating in the PDCCH transmission is configured with a plurality of serving cells;
and determining the CORESET priority rule based on the CSS set index or the CSS set pair index corresponding to each CORESET, and selecting the at least one CORESET from the one or more CORESETs each containing the CSS set comprises:
determining one or more CORESETs corresponding to all CSS set pairs from the one or more CORESETs each containing the CSS set;
selecting a serving cell with a smallest serving cell index from serving cells each having a CSS set pair; and
determining the CORESET priority rule based on the CSS set index or the CSS set pair index corresponding to each CORESET, and selecting the at least one CORESET from one or more CORESETs corresponding to the CSS set pair corresponding to the serving cell with the smallest serving cell index.

10. The method of claim 7, wherein a terminal participating in the PDCCH transmission is configured with a plurality of serving cells;
and determining the CORESET priority rule based on the CSS set index or the CSS set pair index corresponding to each CORESET, and selecting the at least one CORESET from the one or more CORESETs each containing the CSS set comprises:
selecting a serving cell with a smallest serving cell index from serving cells each having a CSS set; and
determining the CORESET priority rule based on the CSS set index or the CSS set pair index corresponding to each CORESET, and selecting the at least one CORESET from one or more CORESETs corresponding to the CSS set or a CSS set pair corresponding to the serving cell with the smallest serving cell index.

11. The method of claim 8, wherein a terminal participating in the PDCCH transmission is configured with a plurality of serving cells;
and determining the CORESET priority rule based on the USS set index or the USS set pair index corresponding to each CORESET, and selecting the at least one CORESET from the one or more CORESETs each containing the USS set comprises:
determining one or more CORESETs corresponding to all USS set pairs from the one or more CORESETs each containing the USS set;
selecting a serving cell with a smallest serving cell index from serving cells each having a USS set pair; and
determining the CORESET priority rule based on the USS set index or USS set pair index corresponding to each CORESET, and selecting the at least one CORESET from one or more CORESETs corresponding to the USS set pair corresponding to the serving cell with the smallest serving cell index.

12. The method of claim 8, wherein a terminal participating in the PDCCH transmission is configured with a plurality of serving cells;
and determining the CORESET priority rule based on the USS set index or the USS set pair index corresponding to each CORESET, and selecting the at least one CORESET from the one or more CORESETs each containing the USS set comprises:
selecting a serving cell with a smallest serving cell index from serving cells each having a USS set; and
determining the CORESET priority rule based on the USS set index or the USS set pair index corresponding to each CORESET, and selecting the at least one CORESET from one or more CORESETs corresponding to the USS set or a USS set pair corresponding to the serving cell with the smallest serving cell index.

13. The method of any one of claims 1-12, wherein the method is executed by a terminal, and performing the PDCCH transmission at the overlapped PDCCH monitor occasion based on the at least one CORESET comprises:
monitoring, at the overlapped PDCCH monitor occasion, a PDCCH in the selected at least one CORESET, and the PDCCH in another CORESET having at least one same Quasi Co Location (QCL) Type D with any CORESET in the selected at least one CORESET; or
determining at least one QCL Type D of the selected at least one CORESET, and monitoring, at the overlapped PDCCH monitor occasion, a PDCCH in a CORESET having a same QCL Type D as any one of the at least one QCL Type D.

14. The method of any one of claims 1-13, wherein,
the at least one CORESET comprises one CORESET, and the one CORESET is configured with a plurality of TCI states; or
the at least one CORESET comprises a plurality of CORESETs, and each CORESET in the plurality of CORESETs is configured with one TCI state; or
the at least one CORESET comprises a plurality of CORESETs, and each CORESET in a portion of the plurality of CORESETs is configured with one TCI state, and each CORESET in another portion of the plurality of CORESETs is configured with a plurality of TCI states.

15. The method of any one of claims 1-14, wherein the method is executed by a terminal, and the method further comprises:
receiving a radio resource control signaling sent by a network device, the radio resource control signaling comprising the plurality of CORESETs and configuration information of search space sets; and
determining the overlapped PDCCH monitor occasion based on the configuration information.

16. A physical downlink control channel (PDCCH) transmission apparatus, comprising:
a processing module, configured to determine a control resource set (CORESET) priority rule, and select at least one CORESET from a plurality of CORESETs based on the CORESET priority rule; and
a transceiver module configured to perform PDCCH transmission at an overlapped PDCCH monitor occasion based on the at least one CORESET.

17. A communication device, comprising:
a processor;
a memory for storing instructions executable by the processor; wherein
the processor is configured to load and execute the executable instructions to implement the physical downlink control channel (PDCCH) transmission method of any one of claims 1-15.

18. A computer-readable storage medium for storing instructions, wherein when the instructions are executed by a processor, the physical downlink control channel (PDCCH) transmission method of any one of claims 1-15 is implemented.
